Europäisches Patentamt

European Patent Office

Office européen des brevets

(11) Veröffentlichungsnummer: **0 393 372**
**A2**

(12) **EUROPÄISCHE PATENTANMELDUNG**

(21) Anmeldenummer: **90105376.9**

(51) Int. Cl.⁵: **G02B 6/12**

(22) Anmeldetag: **21.03.90**

(30) Priorität: **21.04.89 DE 3913242**

(43) Veröffentlichungstag der Anmeldung:
**24.10.90 Patentblatt 90/43**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Cremer, Cornelius, Dr.**
**Bayrischzeller Strasse 29**
**D-8000 München 90(DE)**
Erfinder: **Reichelt, Achim, Dipl.-Phys.**
**Queristrasse 4**
**D-8025 Unterhaching(DE)**

(54) **Verfahren zur Herstellung eines an einem optischen Schichtwellenleiter ausgebildeten Beugungsgitters.**

(57)
2.1. Es soll ein verbessertes Verfahren zur Herstellung eines an einem optischen Schichtwellenleiter ausgebildeten Beugungsgitters angegeben werden, das insbesondere bei Verwendung in einem Wellenlängendemultiplexer nach dem Beugungsgitterprinzip mit Schichtwellenleiter eine gute Nebensprechdämpfung bei einer Einfügedämpfung von weniger als 10 dB ermöglicht.

2.2. Das Gitter wird dazu unter Verwendung eines photolithographischen Verfahrens durch reaktives Ionenätzen hergestellt.

2.3. Herstellung von Wellenlängenmultiplexern oder/und -demultiplexern nach dem Beugungsgitterprinzip mit Schichtwellenleiter.

FIG 1a

FIG 1b

# Verfahren zur Herstellung eines an einem optischen Schichtwellenleiter ausgebildeten Beugungsgitters

Die Erfindung betrifft ein Verfahren zur Herstellung eines an einem optischen Schichtwellenleiter ausgebildeten Beugungsgitters nach dem Oberbegriff des Patentanspruchs 1.

Ein Verfahren der genannten Art ist aus der EP 0 282 878 A2 (= GR 87 P 1156 E) bekannt. Aus diesem Dokument gehen auch Beispiele von Wellenlängendemultiplexern nach dem Beugungsgitterprinzip mit Schichtwellenleiter hervor. Solche Demultiplexer, die auch als Multiplexer betreibbar sind, weisen ein an einer Flanke eines Schichtwellenleiters ausgebildetes Beugungsgitter auf, dem von einer Stelle aus durch einen Schichtwellenleiter verschiedene Wellenlängen zugeleitet sind, die vom Gitter in verschiedene Richtungen gebeugt und im Schichtwellenleiter geführt auf räumlich verteilte zugeordnete Punkte fokussiert werden. Wird von jedem solchen Punkt die zugeordnete Wellenlänge dem Gitter zugeleitet, so wird diese jeweils vom Gitter durch den Schichtwellenleiter der einen Stelle zugeleitet. In diesem Fall ist der Demultiplexer als Multiplexer betrieben.

Bei dem bekannten Verfahren wird beispielsweise das Gitter in InP geätzt. Aus der Literatur (siehe Appl. Opt. 21 (1982) S. 2195; Appl. Opt. 22 (1983) S. 974 und IEEE Proc. 131 (1984) S. 290) ist bekannt, daß als Gitter in Si geätzte gebogene Gitter oder Gitter mit variierender Gitterkonstante (gechirpte Gitter) oder konkave geritzte Gitter verwendet werden können, die an einer Stirnfläche des Schichtwellenleiters angeordnet sind. Auch sind monolithisch integrierte Wellenlängendemultiplexer nach dem Beugungsgitterprinzip mit planaren Transmissions- oder Reflexionsgittern bekannt (siehe IEEE J. Quantum Electron. QE-22 (1986) S. 845).

Aufgabe der Erfindung ist es, ein verbessertes Verfahren zur Herstellung eines an einem optischen Schichtwellenleiter ausgebildeten Beugungsgitters anzugeben, das insbesondere bei Verwendung in einem Wellenlängendemultiplexer nach dem Beugungsgitterprinzip mit Schichtwellenleiter eine gute Nebensprechdämpfung bei einer Einfügedämpfung von weniger als 10 dB ermöglicht.

Diese Aufgabe wird ausgehend von einem Verfahren der eingangs genannten Art durch die im kennzeichnenden Teil des Patentanspruchs 1 angegebenen Merkmale gelöst.

Ein besonderer Vorteil des erfindungsgemäßen Verfahrens liegt darin, daß Gitter mit hohem Beugungswirkungsgrad erzeugt werden können und zum Aufbau von Wellenlängenmultiplexern und -demultiplexern eine verhältnismäßig einfache Justage des Photodioden- oder Faserarrays mit nur zwei linearen Justierbewegungen ermöglicht ist.

Das erfindungsgemäße Verfahren erlaubt vorteilhafterweise die Herstellung von Wellenlängendemultiplexern und Multiplexern für den praktischen Einsatz in einem Lichtwellenleiternetz.

Als Schichtwellenleiter können bei dem erfindungsgemäßen Verfahren bevorzugter- und vorteilhafterweise die in den Ansprüchen 2 bis 4 angegebenen Wellenleiter verwendet werden.

Bevorzugte und vorteilhafte Materialien der Schicht aus dem ätzbaren Maskierungsmaterial und der strahlungsempfindlichen Schicht gehen aus den Ansprüchen 5 bis 7 hervor.

Die Bestrahlung der strahlungsempfindlichen Schicht wird vorteilhafterweise gemäß Anspruch 8 mit einem schreibenden Strahl vorgenommen, der eine genaue Vorzeichnung der zickzackförmigen Grenzlinie erlaubt.

Die Erfindung wird am Beispiel der Herstellung eines Wellenlängenmultiplexers und -demultiplexers nach dem Beugungsgitterprinzip mit Schichtwellenleiter anhand der Figuren näher erläutert. Es zeigen:

Die Figuren 1a, 1b bis 5a, 5b verschiedene Verfahrensstufen in Draufsicht bzw. Seitenansicht, wobei

die Figuren 1a, 1b eine Ausgangsstufe des Verfahrens,

die Figuren 2a, 2b eine Verfahrensstufe nach dem Entwickeln der strahlungsempfindlichen Schicht,

die Figuren 3a, 3b eine Verfahrensstufe nach dem Abätzen der Schicht aus ätzbarem Maskierungsmaterial,

die Figuren 4a, 4b eine Verfahrensstufe nach dem Herstellen des Gitters durch reaktives Ionenätzen und

die Figuren 5a, 5b den fertigen Multiplexer bzw. Demultiplexer zeigen.

Die Figur 5c zeigt ausschnittsweise einen Schnitt durch die Figur 5a längs der Schnittlinie I-I, die eine auf das fertiggestellte Gitter aufgedampfte reflektierende Schicht darstellt.

Die Figur 6 zeigt eine zickzackförmige Grenzlinie mit variierender Gitterkonstante längs einer geraden Hauptlinie, die ein gechirptes Gitter definiert, das anstelle des konkav gekrümmten Gitters mit konstanter Gitterkonstante nach Figur 5a verwendet werden kann.

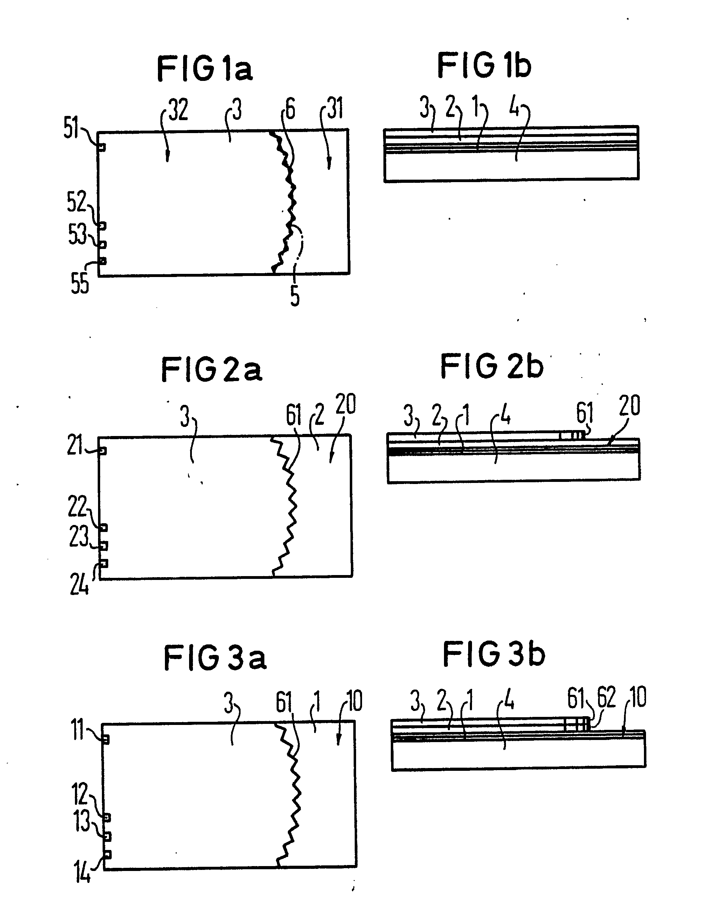

Die Verfahrensausgangsstufe nach den Figuren 1a und 1b besteht aus dem auf einem Substrat 4 aufgebrachten Schichtwellenleiter 1 aus dem durch reaktives Ionenätzen ätzbaren Material beispielsweise aus einem in Glas ausgebildeten Monomodewellenleiter, der mit der Schicht 2 aus ätzbarem Maskierungsmaterial für das reaktive Ionenätzen abgedeckt ist. Dieses Maskierungsmaterial besteht beispielsweise aus aufgedampftem Al. Über der Schicht 2 ist die für die bestimmte Strahlung, vorzugsweise einen Elektronenstrahl empfindliche Schicht 3, beispielsweise ein Photoresist, angeordnet.

Die Oberfläche der Schicht 3 wird durch eine entlang einer vorbestimmten Hauptlinie 5 vorbestimmt zickzackförmig verlaufende und das zu erzeugende Gitter definierende Grenzlinie 6 in einen zu bestrahlenden Schichtbereich 31 und einen nicht zu bestrahlenden Schichtbereich 32 unterteilt.

Im Schichtbereich 32 sind vorteilhafterweise an einer der Grenzlinie 6 gegenüberliegenden Kante des Wellenleiters oder Substrats kleine Aussparungen durch Linien 51 bis 55 definiert, die ebenfalls bestrahlt werden und Justiermarken für anzukoppelnde Fasern und/oder Detektorarrays definieren. Solche Justierhilfen, welche die spätere Fertigstellung des Multiplexers bzw. Demultiplexers erheblich erleichtern, werden somit vorteilhafterweise gleichzeitig mit dem Gitter hergestellt.

Nach der Bestrahlung des Bereiches 31 und der durch die Linien 51 bis 55 ausgesparten Bereiche mit beispielsweise einem schreibenden Elektronenstrahl, der eine genaue Nachzeichnung der Grenzlinie 6 erlaubt, werden durch Entwickeln die bestrahlten Teile der Schicht 3 entfernt, wonach die Verfahrensstufe nach den Figuren 2a, 2b mit den von der Schicht 3 entfernten Teilen 20 und 21 bis 24 und der zickzackförmig verlaufenden Stufe 61 der Schicht 61 entsteht, deren Verlauf sehr genau dem Verlauf der Grenzlinie 6 entspricht.

Danach wird in den Teilen 20 und 21 bis 24 die Schicht 2 aus Aluminium abgeätzt, wodurch die Verfahrensstufe nach den Figuren 3a, 3b mit dem von dieser Schicht befreiten Teile 10 und 11 bis 14 sowie der zickzackförmig verlaufenden Stufe 62 der Schciht 2 entstehen. Der Verlauf dieser Stufe 62 entspricht sehr genau dem Verlauf der Stufe 61.

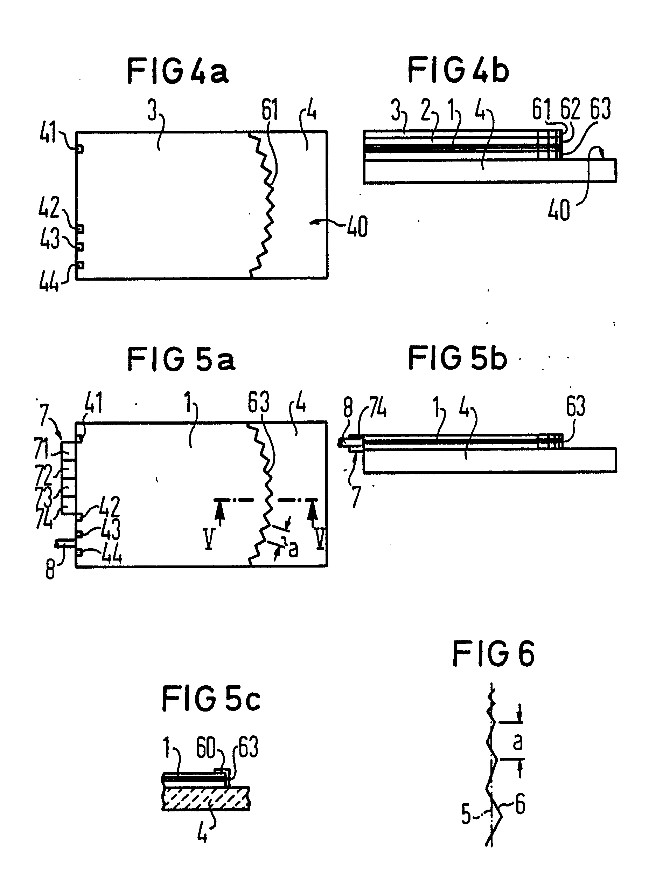

Danch wird gegebenenfalls nach Entfernen der strahlungsempfindlichen Schicht 3 durch reaktives Ionenätzen (RIE), beispielsweise unter Verwendung eines Carbonfluorid-Gases, in den Teilen 10 und 11 bis 14 der Wellenleiter 1 und ggf. auch das Substrat bis zu einer vorbestimmten Tiefe abgetragen, wodurch die Verfahrensstufe nach den Figuren 4a, 4b mit den abgetragenen Teilen 40 und 41 bis 44 und der zickzackförmig verlaufenden Stufe 63 am Schichtwellenleiter 1 entsteht. Der Verlauf der Stufe 63 entspricht sehr genau dem Verlauf der Stufen 61 und 62. Diese Stufe 63 definiert das Beugungsgitter am Schichtwellenleiter 1 mit der Gitterkonstanten a. Mit Hilfe des reaktiven Ionenätzverfahrns lassen sich vorteilhafterweise senkrechte Stufen 63 mit guter Kantenrauhigkeit bis zu Tiefen von 10 bis

20 μm herstellen.

Nach Entfernen der Schicht 2 aus Aluminium wird die das Gitter definierende Stufe 63 zur Erhöhung des Beugungswirkungsgrades mit einer reflektierenden Schicht 60, beispielsweise aus Gold, bedampft, wie sie in der Figur 5c dargestellt ist. Danach werden an die dem Gitter 63 gegenüberliegende Kante des Schichtwellenleiters 1 eine Faser 8 und ein Detektorarray 7 mit Detektoren 71 bis 74 unter Zuhilfenahme der tiefgeätzten Teile 41 bis 44 als Justierhilfen angebracht. Anstelle des Detektorarrays kann auch ein Faserarray angebracht werden. Die Detektoren können auch auf dem Substrat integriert werden, sofern dieses aus Halbleitermaterial besteht.

Anstelle des konkaven sägezahnförmigen Gitters 63 kann auch ein gerades gechirptes Gitter verwendet werden, das beispielsweise durch die längs der geraden Hauptlinie 5 verlaufende zickzackförmige Grenzlinie 6 in Figur 6 definiert sein kann.

Die Gitterform kann rechnerisch beispielsweise mit Hilfe von ray-tracing-Methoden (siehe L. Ielsen: Novel ways for tracking rays" : J. Opt. Soc. Am. 2 (1985) S. 954) oder auch durch BPM-Rechnungen (siehe L. Thylén "The beam propagation method: an analysis of its applicability", Optical and Quantum Electronics, 15 (1983) S. 433-439) optimiert werden.

**Ansprüche**

1. Verfahren zur Herstellung eines an einem optischen Schichtwellenleiter ausgebildeten Beugungsgitters (63), insbesondere eines Gitters eines integriert optischen Wellenlängenmultiplexers oder/und -demultiplexers nach dem Beugungsgitterprinzip mit Schichtwellenleiter, wobei das Gitter durch Ätzen hergestellt wird, **gekennzeichnet durch**

a) Verwendung eines Schichtwellenleiters (1) aus einem durch reaktives Ionenätzen ätzbaren Material, der mit einer Schicht (2) aus einem ätzbaren Maskierungsmaterial für das reaktive Ionenätzen abgedeckt ist, über der eine für eine bestimmte Strahlung empfindliche Schicht (3) angeordnet ist,

b) teilweise Bestrahlung der strahlungsempfindlichen Schicht (3) derart, daß ein bestrahlter Schichtbereich (31) und ein daran angrenzender unbestrahlter Schichtbereich (32) längs einer entlang einer vorbestimmten Hauptlinie (5) vorbestimmt zickzackförmig verlaufenden und das zu erzeugende Gitter (63) definierenden Grenzlinie (6) voneinander getrennt sind,

c) Entfernen entweder des bestrahlten oder unbestrahlten Schichtbereichs (31 bzw. 32) der strahlungsempfindlichen Schicht (3) längs der zickzackförmigen Grenzlinie (6) durch Entwickeln dieser Schicht (3),

d) Entfernen eines von der strahlungsempfindlichen Schicht (3) befreiten Teils (20) der Schicht (2) aus dem Maskierungsmaterial längs der zickzackförmigen Grenzlinie (6) durch Abätzen, und

e) Entfernen eines von der Schicht (2) aus dem Maskierungsmaterial befreiten Teils (10) des Schichtwellenleiters (1) längs der zickzackförmigen Grenzlinie (6) durch reaktives Ionenätzen.

2. Verfahren nach Anspruch 1, **gekennzeichnet durch** die Verwendung eines durch ein Ionenaustauschverfahren in Glas hergestellten Schichtwellenleiters (1).

3. Verfahren nach Anspruch 1, **gekennzeichnet durch** die Verwendung eines durch Abscheiden einer Schicht aus Glas auf einem Substrat mittels Flammenhydrolyse hergestellten Schichtwellenleiters.

4. Verfahren nach Anspruch 1, **gekennzeichnet durch** die Verwendung eines auf einem Substrat aus Halbleitermaterial durch ein Epitaxieverfahren hergestellten Schichtwellenleiters (1).

5. Verfahren nach einem der vorhergehenden Ansprüche, **dadurch gekennzeichnet,** daß die Schicht (2) aus dem ätzbaren Maskierungsmaterial aus Metall besteht.

6. Verfahren nach Anspruch 5, **dadurch gekennzeichnet,** daß die Schicht (2) aus Metall aufgedampft wird.

7. Verfahren nach einem der vorhergehenden Ansprüche, insbesondere nach Anspruch 5, **dadurch gekennzeichnet,** daß die strahlungsempfindliche Schicht (3) aus einem Photoresist besteht.

8. Verfahren nach einem der vorhergehenden Ansprüche, **dadurch gekennzeichnet,** daß die Bestrahlung der strahlungsempfindlichen Schicht (3) mit einem Elektronenstrahl vorgenommen wird.

FIG 1a

FIG 1b

FIG 2a

FIG 2b

FIG 3a

FIG 3b

# FIG 4a

# FIG 4b

# FIG 5a

# FIG 5b

# FIG 5c

# FIG 6